# EUROPEAN PATENT SPECIFICATION

(11) **EP 0 376 485 B1**
(45) Date of publication and mention of the grant of the patent: **04.08.1993**
(21) Application number: 89312374.5
(22) Date of filing: 29.11.1989
(51) Int. Cl.: B01D 53/34

(54) **Quaternary polyamine as sulfite oxidation inhibitor**
Quartäres Polyamin als Inhibitor der Sulfitoxidation
Polyamine quaternaire comme antioxydant de sulfite

(30) Priority: 29.11.1988 US 277159
(43) Date of publication of application: 04.07.1990
(73) Proprietor: THE DOW CHEMICAL COMPANY, Midland, Michigan 48640 (US)
(72) Inventor: Bedell, Stephen A., Lake Jackson Texas 77566 (US)
(74) Representative: Burford, Anthony Frederick

(56) References cited:
- US-A- 4 310 438
- US-A- 4 324 775
- US-A- 4 342 733

## Description

The present invention relates to alkali scrubbing solutions for sulfur dioxide absorption, and more particularly to such scrubbing solutions containing cationic polyelectrolytes to inhibit oxidation of sulfite to sulfate in the scrubbing solution. The invention also relates to an improvement in a process for removing sulfur dioxide from a gas stream wherein the gas stream containing the sulfur dioxide is contacted with an aqueous alkali solution, and more specifically to the improvement wherein a cationic polyelectrolyte is employed to inhibit oxidation of sulfite to sulfate.

From US-A-4,310,438, it is known to add water-soluble polyethyleneamines having at least one secondary amine and two primary amines to a sulfite-containing aqueous medium for reducing the oxidation of sulfite to sulfate therein. The sulfite-containing medium with the polyethyleneamines additive is thus useful in wet scrubber systems for sulfur dioxide absorption from a gas containing the same.

US-A-4,342,733 teaches use of polyphosphate and organophosphonic acid compounds in a scrubbing liquor to supplement and enhance the antioxidant activity of sulfite antioxidant agents such as the linear polyethyleneamines and substituted secondary and tertiary aromatic amines.

US-A-4,324,775 discloses the removal of sulfur dioxide from a gaseous mixture by (a) contacting said mixture with an aqueous scrubbing solution containing the salt (M₂B) of an alkali metal cation (M) with a divalent anion (B) derived from an acid having a pKa of at least 3.0; (b) contacting the pregnant spent scrubbing solution with an organic liquid phase containing an acid salt (AHB) of an amine cationic group (A) containing a C₈-C₄₅ hydrophobic subgroup with a monovalent proton-containing acidic anion (HB); and (c) heating the resultant sulfur-bearing amine salt to release sulfur dioxide and provide a reduced acidity amine phase, which phase is contacted with aqueous alkali metal HB salt to regenerate the scrubbing solution and the amine salt. Specified amine salts include trialkylmethyl ammonium chlorides having C₈-C₁₀ straight chain alkyl groups.

Other sulfur dioxide absorption solvents, buffers and methods are described in various references, such as, for example, US-A-4,387,037; US-A-4,363,791; and US-A-3,873,673.

A problem with the polyethylene amine sulfite antioxidants is that the polyethyleneamines are volatile, particularly the lower molecular weight polyethyleneamines such as triethylenetetramine and tetraethylenepentamine. This results in process losses from the sulfur dioxide scrubbing system and can also pose an odor problem. In addition, such amines can be difficult for waste water treatment systems to tolerate, and therefore, disposal of spent scrubbing solution from systems employing the polyethyleneamines is complicated. For example, the lower molecular weight polyethylene- amines are not retained on ultrafiltration membranes.

Another problem with the polyethyleneamines as additives for sulfite oxidation inhibition is that they readily complex with metals, and it is necessary to add additional quantities of the polyethyleneamines to the scrubbing liquor when metals and other cations are present in the scrubbing liquor. Since the oxidation of sulfite to sulfate is trace-metal catalyzed, and suppressed by metal complexing agents as described in Huss, Jr., et al., J. Amer Chem. Soc., v. 100, p. 6252 (1978), an explanation for the anti-oxidant properties of such polyethyleneamines is that they complex with any metal ions which may be present in the scrubbing liquor to inhibit such catalysis, and do not function as true antioxidants.

It would be desirable to have an antioxidant that inhibits oxidation of sulfites to sulfates in scrubbing solutions for contacting SO₂ containing gases that is not lost through volatization or complexing with metal ions that may be present.

The present invention resides in the use of a water-soluble poly(diallyldimethylammonium chloride) as an oxidation inhibitor of sulfite solutions resulting from aqueous alkali solutions, employed to scrub SO₂ contaminated gases. Since this polyelectrolyte is polymeric in nature, it is less volatile than the lower molecular weight polyethyleneamines, and hence, less likely to be lost from the scrubbing liquor through evaporation. The use thereof in alkali scrubbing systems also substantially avoids the odor problems associated with the polyethyleneamines. The polyelectrolyte of the present invention is widely used as a government-approved flocculating agents for water treatment systems, and thus does not complicate disposal of the spent scrubbing liquor. It can also be recovered, if desired, by the use of ultrafiltration membranes since it is retained thereby. A further advantage is that the polyelectrolyte of the present invention will not complex metal ions, and can thus be used in the presence of metal ions without substantially affecting the effectiveness thereof as a sulfite oxidation inhibitor.

Broadly, the present invention provides an aqueous sulfur dioxide scrubbing solution comprising an aqueous alkali solution suitable for scrubbing gaseous sulfur dioxide. The solution contains sulfite and a cationic polyelectrolyte in an amount effective to inhibit oxidation of the sulfite to sulfate, wherein the polyelectrolyte is a water soluble poly(diallyldimethylammonium chloride).

In another aspect of the invention, there is provided, a process for removing sulfur dioxide from a gas stream wherein the gas stream containing the sulfur dioxide is contacted with an aqueous alkali solution, said process characterized by the alkali solution containing an effective amount of a cationic polyelectrolyte that inhibits oxidation of sulfites to sulfates, and wherein the polyelectrolyte is a water soluble poly(diallyldimethylammonium chloride).

The present invention is generally applicable to any sulfite-containing aqueous gas scrubbing medium, and also to alkali solutions used to prepare such a medium. For example, the sulfite oxidation inhibitor of the present invention may be used in sulfite solutions per se which are used to scrub sulfur dioxide gases, as well as in alkali or caustic solutions which are used for this purpose, such as, for example, caustic soda, potash, ammonium hydroxide, lime, limestone, and amines. In the latter instance, the polyelectrolyte containing alkali solution is introduced directly to the sulfur dioxide scrubbing system at start-up or is added as a makeup to replenish alkali losses, but in either case, it is not necessary in this embodiment to add the polyelectrolyte separately.

The polyelectrolyte of the present invention is water-soluble (i.e. it is soluble or dispersible in the alkali and/or sulfite solution at an effective concentration). The polyelectrolyte preferably has a molecular weight sufficiently high so that it is non-volatile, preferably at least 10,000 daltons. On the other hand, the molecular weight should not be so high that the polyelectrolyte is not soluble or dispersible in solution.

The polyelectrolyte is employed in amounts which are effective to inhibit the rate of oxidation of sulfite therein. Usually, the amount of the polyelectrolyte is 1 ppm to 3000 ppm, preferably 5 to 500 ppm and especially 10 to 300 ppm. While amounts higher than this may be employed if desired, there is generally no advantage to be obtained by employing excessive amounts of the polyelectrolyte and it is generally uneconomical. On the other hand, if amounts substantially less than this are employed, there may not be sufficient polyelectrolyte to effect a substantial reduction in the sulfite oxidation rate.

The alkali solution containing the polyelectrolyte is advantageously employed in sulfur dioxide scrubbing systems that are well known in the art. Typically, the scrubbing solution is intimately contacted with a sulfur dioxide-containing fluid stream at appropriate conditions, e.g. a pH of 4 to 10 and a temperature of 0 to 95°C. The sulfur dioxide is absorbed into the scrubbing solution, generally as sulfite and bisulfite. The sulfites-containing solution is then typically regenerated for reuse in the scrubbing system, used as a sulfite source for another process, and/or disposed of. The inhibition of the oxidation of the sulfites with the polyelectrolyte according to the present invention is desirable to minimize alkali consumption, to facilitate pH control, to minimize precipitation and scale formation and for other various reasons, depending on the particulars of the selected scrubbing system.

### Example

Sodium sulfite (1.26 g) and sodium bisulfite (1.04 g) were diluted to 100 ml total volume with OMNISOL brand ultrapure water and sufficient AGEFLOC WT-40 (40 percent poly(diallyldimethylammonium chloride)) to obtain a 40 ppm concentration of said polyelectrolyte in said sulfite solution. Air was sparged into the solution at a rate of 425 cc per minute. At periodic time intervals a 1.0 ml aliquot was removed and analyzed by iodine titration for total sulfites (including bisulfite). The following results were obtained:

| Time Elapsed (Minutes:Seconds) | Sulfites Concentration (Moles/Liter) | Percent of Initial Sulfites |
|---|---|---|
| 0:00:18 | 0.198 | 99 |
| 0:02:25 | 0.189 | 94 |
| 0:12:18 | 0.154 | 77 |
| 0:27:02 | 0.100 | 50 |
| 0:41:30 | 0.098 | 49 |
| 2:05:00 | 0.044 | 22 |

### Comparative Example

The foregoing example was repeated, except that no AGEFLOC WT-40 or other polyelectrolyte was added to the solution. The results are as follows:

| Time Elapsed (Minutes:Seconds) | Sulfites Concentration (Moles/Liter) | Percent of Initial Sulfites |
|---|---|---|
| 00:18 | 0.175 | 88 |
| 02:45 | 0.172 | 86 |
| 09:30 | 0.109 | 55 |
| 17:40 | 0.078 | 39 |
| 29:30 | 0.073 | 37 |
| 46:50 | 0.055 | 28 |

The foregoing examples illustrate the effectiveness of the polyelectrolyte of the present invention in stabilizing sulfite solutions against oxidation.

## Claims

1. An aqueous alkali solution suitable for scrubbing gaseous sulfur dioxide and containing an anti-oxidant amount of a cationic polyelectrolyte that inhibits oxidation of sulfites to sulfates, characterized in that said polyelectrolyte is a poly(diallyldimethylammonium chloride) which is soluble or dispersible in the alkali solution at an anti-oxidation effective concentration.

2. An aqueous alkali solution containing sulfite ions and an anti-oxidant amount of a cationic polyelectrolyte that inhibits oxidation of sulfites to sulfates, characterized in that said polyelectrolyte is a poly(diallyldimethylammonium chloride) which is soluble or dispersible in the alkali solution at an anti-oxidation effective concentration.

3. A solution as claimed in Claim 1 or Claim 2, wherein said alkali is caustic soda, potash, lime or limestone.

4. A solution as claimed in any one of the preceding claims, wherein said polyelectrolyte has a molecular weight of at least 10,000 daltons.

5. A solution as claimed in any one of the preceding claims, wherein said polyelectrolyte is present therein at a concentration of 1 to 3000 ppm.

6. A scrubbing solution as claimed in Claim 5, wherein said polyelectrolyte is present therein at a concentration of 5 to 500 ppm.

7. A scrubbing solution as claimed in Claim 6, wherein said polyelectrolyte is present therein at a concentration of 10 to 300 ppm.

8. A process for scrubbing sulfur dioxide from a gas stream wherein the gas stream is contacted with an aqueous alkali solution as claimed in any one of the preceding claims.

9. A process as claimed in Claim 8, wherein the polyelectrolyte is recovered from the alkali solution by ultrafiltration.

10. The use of a poly(diallyldimethylammonium chloride) which is soluble or dispersible in aqueous alkali solutions as an anti-oxidant for sulfite ions in said solutions.

## Patentansprüche

1. Wäßrige Alkalilösung, die sich zur Naßabscheidung von gasförmigem Schwefeldioxid eignet und eine antioxidierende Menge eines kationischen Polyelektrolyten enthält, der die Oxidation von Sulfiten zu Sulfaten verhindert,
**dadurch gekennzeichnet,** daß der Polyelektrolyt ein Poly(diallyldimethylammoniumchlorid) ist, das in der Alkalilösung in einer antioxidierend wirkenden Konzentration löslich oder dispergierbar ist.

2. Wäßrige Alkalilösung, die Sulfitionen und eine antioxidierende Menge eines kationischen Polyelektrolyten enthält, der die Oxidation von Sulfiten zu Sulfaten verhindert,
**dadurch gekennzeichnet,** daß der Polyelektrolyt ein Poly(diallyldimethylammoniumchlorid) ist, das in der Alkalilösung in einer antioxidierend wirkenden Konzentration löslich oder dispergierbar ist.

3. Lösung nach Anspruch 1 oder 2, worin das Alkali kaustisches Soda, Pottasche, Kalk oder Kalkstein ist.

4. Lösung nach einem der vorhergehenden Ansprüche, worin der Polyelektrolyt ein Molekulargewicht von mindestens 10.000 Dalton besitzt.

5. Lösung nach einem der vorhergehenden Ansprüche, in welcher der Polyelektrolyt in einer Konzentration von 1 bis 3000 ppm vorliegt.

6. Waschlösung nach Anspruch 5, in welcher der Polyelektrolyt in einer Konzentration von 5 bis 500 ppm vorliegt.

7. Waschlösung nach Anspruch 6, in welcher der Polyelektrolyt in einer Konzentration von 10 bis 300 ppm vorliegt.

8. Verfahren zur Naßabscheidung von Schwefeldioxid aus einem Gasstrom, worin der Gasstrom mit einer wäßrigen Alkalilösung nach einem der vorhergehenden Ansprüche in Kontakt gebracht wird.

9. Verfahren nach Anspruch 8, worin der Polyelektrolyt durch Ultrafiltration aus der Alkalilösung rückgewonnen wird.

10. Verwendung eines Poly(diallydimethylammoniumchlorids), das in wäßrigen Alkalilösungen löslich oder dispergierbar ist, als Antoxidationsmittel für Sulfitionen in diesen Lösungen.

## Revendications

1. Solution alcaline aqueuse convenant pour épurer le dioxyde de soufre gazeux et contenant une quantité anti-oxydante d'un polyélectrolyte cationique qui empêche l'oxydation des sulfites en sulfates, **caractérisée** en ce que ledit polyélectrolyte est un poly(chlorure de diallyl-diméthyl-ammonium) qui est soluble ou dispersable dans la solution alcaline à une concentration empêchant effectivement une oxydation.

2. Solution alcaline aqueuse contenant des ions sulfites et une quantité anti-oxydante d'un polyélectrolyte cationique qui empêche une oxydation des sulfites en sulfates, **caractérisée** en ce que ledit polyélectrolyte est un poly(chlorure de diallyl-diméthyl-ammonium) qui est soluble ou dispersable dans la solution alcaline à une concentration empêchant effectivement une oxydation.

3. Solution selon la revendication 1 ou la revendication 2, dans laquelle ladite solution alcaline est de la soude caustique, de la potasse, de la chaux vive ou du calcaire.

4. Solution selon l'une quelconque des revendications précédentes, dans laquelle le polyélectrolyte a un poids moléculaire d'au moins 10.000 daltons.

5. Solution selon l'une quelconque des revendications précédentes, dans laquelle ledit polyélectrolyte y est présent à une concentration de 1 à 3000 ppm.

6. Solution épuratrice selon la revendication 5, dans laquelle ledit polyélectrolyte y est présent à une concentration de 5 à 500 ppm.

7. Solution épuratrice selon la revendication 6, dans laquelle ledit polyélectrolyte y est présent à une concentration de 10 à 300 ppm.

8. Procédé pour épurer le dioxyde de soufre provenant d'un courant de gaz, procédé dans lequel on met en contact le courant de gaz avec une solution alcaline aqueuse selon l'une quelconque des revendications précédentes.

9. Procédé selon la revendication 8, dans lequel le polyélectrolyte est récupéré de la solution alcaline par ultrafiltration.

10. Utilisation d'un poly(chlorure de diallyl-diméthyl-ammonium) qui est soluble ou dispersable dans des solutions alcalines aqueuses en tant qu'anti-oxydant pour des ions sulfites présents dans lesdites solutions.
